# EUROPEAN PATENT APPLICATION

(11) **EP 4 083 092 A1**
(43) Date of publication of application: **02.11.2022**
(21) Application number: 20905812.2
(22) Date of filing: 03.12.2020
(51) Int. Cl.: C08F 290/00, C08J 5/24

(54) **PREPREG AND MOLDED ARTICLE**

(30) Priority: 25.12.2019 JP 2019234211
(71) Applicant: DIC Corporation, Tokyo 174-8520 (JP)
(72) Inventor: YASUMURA Takashi, Takaishi-shi, Osaka 592-0001 (JP); SHINCHI Tomoaki, Takaishi-shi, Osaka 592-0001 (JP)
(74) Representative: TBK
(86) International application number: PCT/JP2020/044968
(87) International publication number: WO 2021/131564

(57) **Abstract**

Provided is a prepreg containing a urethane (meth)acrylate (A), an ethylenically unsaturated monomer (B), a polymerization initiator (C), and reinforcement fibers (D), characterized in that the urethane (meth)acrylate (A) is a reaction product of a polyisocyanate (a1) and a polyol (a2) having an ethylenically unsaturated group and an aromatic skeleton, and/or a reaction product of a polyisocyanate (a1), a polyol (a3) not having an ethylenically unsaturated group but having an aromatic skeleton, and a hydroxyalkyl (meth)acrylate (a4), and that the ethylenically unsaturated monomer (B) has a molecular weight of 320 or more and a weight reduction rate (%) of less than 2 when heated under atmospheric pressure at 150°C for 3 minutes. The prepreg has excellent moldability and enables to produce a molded article having excellent physical properties such as flexural strength and interlaminar shear strength, and therefore the prepreg can be suitably used in automobile components and the like.

## Description

### Technical Field

The present invention relates to a prepreg and a molded article thereof.

### Background Art

Fiber-reinforced resin composite materials reinforced with reinforcement fibers such as carbon fibers and glass fibers have been receiving attention because they have the characteristics of good heat resistance and mechanical strength despite light weight. They have been increasingly used in various structures, including casings and various components of automobiles and aircraft. Examples of the method for molding such a fiber-reinforced resin composite material include a method in which an intermediate material referred to as a prepreg, in which reinforcement fibers are impregnated with a thermosetting resin, is cured and molded by autoclave molding or press molding.

Resins for prepregs are usually required to have both stability at normal temperature and curability by heating or the like. Thus, in general, thermosetting resins such as epoxy resin compositions have been frequently used. Prepregs containing epoxy resins, however, have a problem of needing to be kept in cold storage because curing proceeds at normal temperature.

In order to solve this problem, a prepreg capable of achieving high productivity and stability at normal temperature has been under development (for example, refer to Patent Literature 1). This prepreg, which includes a specific urethane-modified epoxy (meth)acrylate, an ethylenically unsaturated monomer, a polymerization initiator, and reinforcement fibers, however, poses a problem in that white smoke is generated, resulting in deterioration of the working environment, when left to stand on a mold at 150°C. Moreover, since an ethylenically unsaturated monomer having a high weight reduction rate when heated at around the molding temperature is used, the quality of molded articles and productivity during molding may be adversely affected; for example, blisters may be formed inside the molded articles, insufficient curing may occur on the surfaces of the molded articles, and uncured resin components may adhere to shear edges and the like of molds, resulting in prolonging the mold release time and cleaning time.

### Citation List

### Patent Literature

PTL 1: International Publication No. 2017/110446

### Summary of Invention

### Technical Problem

A problem to be solved by the present invention is to provide a prepreg which has excellent moldability and which enables to produce a molded article having excellent physical properties such as flexural strength and interlaminar shear strength, and in which white smoke is not generated even when the prepreg is left to stand on a mold at 150°C, and to provide a molded article thereof.

### Solution to Problem

The present inventors have found that the problem described above can be solved by a prepreg containing a specific urethane (meth)acrylate, a specific ethylenically unsaturated monomer, a polymerization initiator, and reinforcement fibers, thus completing the present invention.

That is, the present invention relates to a prepreg containing a urethane (meth)acrylate (A), an ethylenically unsaturated monomer (B), a polymerization initiator (C), and reinforcement fibers (D), characterized in that the urethane (meth)acrylate (A) is a reaction product of a polyisocyanate (a1) and a polyol (a2) having an ethylenically unsaturated group and an aromatic skeleton, and/or a reaction product of a polyisocyanate (a1), a polyol (a3) not having an ethylenically unsaturated group but having an aromatic skeleton, and a hydroxyalkyl (meth)acrylate (a4), and that the ethylenically unsaturated monomer (B) has a molecular weight of 320 or more and a weight reduction rate (%) of less than 2 when heated under atmospheric pressure at 150°C for 3 minutes.

### Advantageous Effects of Invention

Molded articles obtained from the prepreg of the present invention are excellent in terms of flexural strength, interlaminar shear strength, and the like, and therefore can be suitably used, for example, in automobile components, railway vehicle components, aerospace craft components, ship components, housing equipment components, sporting components, light vehicle components, building and civil engineering components, and casings of OA equipment and the like.

### Description of Embodiments

A resin composition for prepreg of the present invention is a prepreg containing a urethane (meth)acrylate (A), an ethylenically unsaturated monomer (B), a polymerization initiator (C), and reinforcement fibers (D), in which the urethane (meth)acrylate (A) is a reaction product of a polyisocyanate (a1) and a polyol (a2) having an ethylenically unsaturated group and an aromatic skeleton, and/or a reaction product of a polyisocyanate (a1), a polyol (a3) not having an ethylenically unsaturated group but having an aromatic skeleton, and a hydroxyalkyl (meth)acrylate (a4), and in which the ethylenically unsaturated monomer (B) has a molecular weight of 320 or more and a weight reduction rate (%) of less than 2 when heated under atmospheric pressure at 150°C for 3 minutes.

The urethane (meth)acrylate (A) is a reaction product of a polyisocyanate (a1) and a polyol (a2) having an ethylenically unsaturated group and an aromatic skeleton, and/or a reaction product of a polyisocyanate (a1), a polyol (a3) not having an ethylenically unsaturated group but having an aromatic skeleton, and a hydroxyalkyl (meth)acrylate (a4).

The polyisocyanate (a1) preferably includes a polyisocyanate having a cyclic skeleton from the viewpoint that heat resistance of molded articles is further improved. These polyisocyanates (a1) can be used alone or in combination of two or more.

Examples of the polyisocyanate (a1) include aromatic polyisocyanates, such as 2,4'-diphenylmethane diisocyanate, 4,4'-diphenylmethane diisocyanate, carbodiimide-modified 4,4'-diphenylmethane diisocyanate, polymethylene polyphenyl polyisocyanate, nurate-modified diphenylmethane diisocyanate, biuret-modified diphenylmethane diisocyanate, urethane imine-modified diphenylmethane diisocyanate, polyol-modified diphenylmethane diisocyanate modified with a polyol having a number-average molecular weight of 1,000 or less, such as diethylene glycol or dipropylene glycol, tolylene diisocyanate (TDI), tolidine diisocyanate, xylylene diisocyanate, 1,5-naphthalene diisocyanate, and tetramethylxylene diisocyanate; alicyclic polyisocyanates, such as isophorone diisocyanate (IPDI), hydrogenated diphenylmethane diisocyanate, hydrogenated xylylene diisocyanate, and norbornene diisocyanate; and aliphatic polyisocyanates, such as hexamethylene diisocyanate, nurate-modified hexamethylene diisocyanate, biuret-modified hexamethylene diisocyanate, hexamethylene diisocyanate adducts, and dimer acid diisocyanate. In particular, from the viewpoint that heat resistance of molded articles is further improved, 2,4'-diphenylmethane diisocyanate, 4,4'-diphenylmethane diisocyanate, carbodiimide-modified 4,4'-diphenylmethane diisocyanate, and polymethylene polyphenyl polyisocyanate are preferable. Note that these polyisocyanates (a1) can be used alone or in combination of two or more.

The polyol (a2) has an ethylenically unsaturated group and an aromatic skeleton. From the viewpoint that heat resistance is further improved, a multifunctional epoxy (meth)acrylate is preferable. Examples thereof include reaction products of a bisphenol-type epoxy resin, such as a bisphenol A-type epoxy resin, a bisphenol F-type epoxy resin, a bisphenol fluorene-type epoxy resin, or a biscresol fluorene-type epoxy resin, or a novolac-type epoxy resin, such as a phenol novolac-type epoxy resin or a cresol novolac-type epoxy resin, with (meth)acrylic acid. Preferred are products obtained by reaction of an epoxy resin having an epoxy equivalent in the range of 180 to 500 with (meth)acrylic acid. The number of functional groups therein is preferably 1.5 to 3.0 from the viewpoint of balance between heat resistance and strength properties.

The polyol (a3) does not have an ethylenically unsaturated group but has an aromatic skeleton. Examples thereof include alkylene oxide adducts of bisphenol compounds, such as alkylene oxide adducts of bisphenol A, alkylene oxide adducts of bisphenol S, and alkylene oxide adducts of bisphenol F; alkylene oxide adducts of dihydroxybenzene compounds, such as 1,3-bis(2-hydroxyethoxy)benzene and 1,4-bis(2-hydroxyethoxy)benzene; alkylene oxide adducts of biphenol compounds, such as 2'-[(1,1'-biphenyl-4,4'-diyl)bisoxy]bisethanol; alkylene oxide adducts of dihydroxynaphthalene compounds, and 9,9-bis[4-(2-hydroxyethoxy)phenyl]fluorene. In particular, from the viewpoint of balance among compatibility, heat resistance, water resistance, and strength properties, alkylene oxide adducts of bisphenol compounds are preferable. More preferable are ethylene oxide adducts of bisphenol compounds with an average number of moles added of 2 to 10 mol.

Examples of the hydroxyalkyl (meth)acrylate (a4) include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, and 3-hydroxy-n-butyl (meth)acrylate. In particular, from the viewpoint of balance among strength properties, 2-hydroxyethyl (meth)acrylate is preferable. Note that these hydroxyalkyl (meth)acrylates (a4) can be used alone or in combination of two or more.

Furthermore, as necessary, as a starting material of the urethane (meth)acrylate (A), a polyol other than the polyols (a2) to (a4) can be also used. Examples of the other polyol that can be used include polyester polyols, acrylic polyols, polyether polyols, polycarbonate polyols, and polyalkylene polyols.

The molar ratio (a3/a4) of the polyol (a3) to the hydroxyalkyl (meth)acrylate (a4) is preferably 60/40 to 20/80, and more preferably 50/50 to 30/70, from the viewpoint that heat resistance and curability are further improved.

The molar ratio (NCO/OH) of the isocyanate group (NCO) of an isocyanate compound to the hydroxyl group (OH) of a hydroxyl group-containing compound, the isocyanate compound and the hydroxyl group-containing compound being starting materials of the urethane (meth)acrylate (A), is preferably 0.7 to 1.3, more preferably 0.8 to 1.1, and still more preferably 0.8 to 1.0, from the viewpoint of balance between heat resistance and strength properties.

The ethylenically unsaturated monomer (B) has a molecular weight of 320 or more and a weight reduction rate (%) of less than 2 when heated under atmospheric pressure at 150°C for 3 minutes. Therefore, generation of white smoke can be prevented when left to stand on a mold at 150°C.

In the present invention, the method for measuring the weight reduction rate (%) of the ethylenically unsaturated monomer (B) when heated under atmospheric pressure at 150°C for 3 minutes is as follows. An ethylenically unsaturated monomer in the amount of 0.5 to 0.6 g at normal temperature is weighed into a petri dish made of tin plate with an inside diameter of about 62 mm and smoothing is performed for one minute. Then, the petri dish is left to stand on a mold with a surface temperature of 150°C, under atmospheric pressure, for 3 minutes. After 3 minutes, the petri dish is recovered and left at room temperature for 30 to 60 seconds. Then, the weight is measured up to four decimal places with a precision balance, and the reduction due to heating (%) is calculated down to two decimal places. The number of samples is 2.

Examples of the ethylenically unsaturated monomer (B) include dimethacrylates of ethylene oxide adducts of bisphenol A, tricyclodecanedimethanol dimethacrylate, 1,12-dodecane diol dimethacrylate, hydrogenated bisphenol A dimethacrylate, polytetramethylene glycol dimethacrylate, 9,9-bis[4-(2-methacryloyloxyethoxy)phenyl]fluorene, dimethacrylates of ethylene oxide adducts of isosorbide, dimethacrylates of ethylene oxide adducts of hydrogenated bisphenol A, trimethacrylates of ethylene oxide adducts of trimethylolpropane, tetramethacrylates of ethylene oxide adducts of pentaerythritol, and hexamethacrylates of ethylene oxide adducts of dipentaerythritol. From the viewpoint of balance among curability, heat resistance, and strength properties, the molecular weight is preferably 320 to 2,000, and the (meth)acrylic equivalent is preferably 150 to 1,000, and more preferably 150 to 500. Similarly, from the viewpoint of balance among curability, heat resistance, and strength properties, the number of functional groups is preferably 2 to 4, and more preferably 2.

The prepreg of the present invention may contain an ethylenically unsaturated monomer having a weight reduction rate (%) of 2 or more when heated under atmospheric pressure at 150°C for 3 minutes. However, from the viewpoint of preventing the generation of white smoke when left to stand on a high-temperature mold, the content thereof in the prepreg is preferably less than 1% by mass.

Furthermore, from the viewpoint of improved balance among prevention of contamination of the working environment, handleability of the prepreg, the quality of molded articles, and productivity, the content of the ethylenically unsaturated monomer (B) (hereinafter, abbreviated as the "content (B)") in the total amount of the urethane (meth)acrylate (A) and the ethylenically unsaturated monomer (B) is preferably 5 to 50% by mass, and more preferably 10 to 40% by mass.

The polymerization initiator (C) is not particularly limited, but is preferably an organic peroxide. Examples thereof include diacyl peroxide compounds, peroxy ester compounds, hydroperoxide compounds, ketone peroxide compounds, alkyl perester compounds, percarbonate compounds, and peroxyketals. These may be appropriately selected depending on the molding conditions. Note that these polymerization initiators (C) can be used alone or in combination of two or more.

Of these, in order to shorten the molding time, it is preferable to use a polymerization initiator whose temperature for obtaining a half-life period of 10 hours is 60°C or higher and 110°C or lower. When a polymerization initiator whose temperature for obtaining a half-life period of 10 hours is 70°C or higher and 105°C or lower is used, the prepreg has a long life at normal temperature and can be cured in a short time (within 5 minutes), and thus the polymerization initiator is preferred. By using the polymerization initiator in the prepreg of the present invention, higher curability and higher moldability can be obtained. Examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxydiethyl acetate, t-butylperoxyisopropyl carbonate, t-butylperoxy 2-ethylhexyl carbonate, t-amylperoxyisopropyl carbonate, t-amylperoxy 2-ethylhexyl carbonate, t-hexylperoxyisopropyl carbonate, di-tert-butylperoxyhexahydroterephthalate, t-amylperoxytrimethylhexanoate, t-amylperoxyisononanoate, t-hexylperoxy-2-ethylhexanoate, and n-butyl 4,4-di(t-butylperoxy)valerate. The optimum organic peroxide is selected and used depending on the molding conditions.

The amount of the polymerization initiator (C) to be used is preferably in the range of 0.5 to 3 parts by mass relative to the total 100 parts by mass of the urethane (meth)acrylate (A) and the ethylenically unsaturated monomer (B), from the viewpoint that excellent curing characteristics and excellent storage stability can be obtained.

Examples of the reinforcement fibers (D) include carbon fibers, glass fibers, silicon carbide fibers, alumina fibers, boron fibers, metal fibers, and organic fibers, such as aramid fibers, vinylon fibers, and Tetoron fibers. From the viewpoint that molded articles having higher strength and higher elasticity can be obtained, carbon fibers or glass fibers are preferable, and carbon fibers are more preferable. These reinforcement fibers (D) may be used in one kind or in combination of two or more kinds.

As the carbon fibers, various kinds, such as polyacrylonitrile-based, pitch-based, and rayon-based carbon fibers, can be used. Of these, from the viewpoint that high-strength carbon fibers can be easily obtained, polyacrylonitrile-based carbon fibers are preferable.

The form of the reinforcement fibers (D) is not particularly limited. Examples thereof include reinforcement fiber tows in which reinforcement fiber filaments are bundled together, unidirectional carbon fiber materials in which reinforcement fiber tows are arranged in parallel in one direction, woven fabrics or reinforcement fibers that are cut into short lengths, and nonwoven fabrics and paper formed of reinforcement fibers that are cut into short lengths. When unidirectional carbon fiber materials are used as the reinforcement fibers, by stacking and molding the unidirectional carbon fiber materials, high mechanical properties can be obtained, which is preferred.

In the case where reinforcement fibers that are cut into short lengths are used, from the viewpoint that in-mold flowability during molding and the appearance of molded articles are further improved, it is preferable to use carbon fibers cut into 2.5 to 50 mm pieces.

In the case of woven fabrics, examples thereof include plain fabrics, twill fabrics, satin fabrics, and stitched sheets, such as non-crimp fabrics, in which sheets formed of fiber bundles arranged in parallel in one direction or sheets stacked at different stacking angles are stitched together in order to avoid separation.

The weight of the reinforcement fibers (weight per square meter of the fibers) is not particularly limited, but is preferably 10 g/m² to 650 g/m². When the weight is 10 g/m² or more, the variation in fiber width becomes small, leading to better mechanical properties, which is preferred. When the weight is 650 g/m² or less, resin impregnation is improved, which is preferred. The weight is more preferably 50 to 500 g/m², and particularly preferably 50 to 300 g/m².

The content of the reinforcement fibers (D) in the prepreg of the present invention is preferably in the range of 20 to 85% by mass, and more preferably in the range of 40 to 80% by mass, from the viewpoint that the mechanical strength of the resulting molded articles is further improved.

The prepreg of the present invention may contain components other than those described above. Examples of components that can be incorporated into the prepreg include thermosetting resins, thermoplastic resins, polymerization inhibitors, curing accelerators, fillers, low profile additives, mold release agents, thickeners, viscosity depressants, pigments, antioxidants, plasticizers, flame retardants, antimicrobial agents, ultraviolet stabilizers, reinforcement materials, and photo-curing agents.

Examples of the thermosetting resins include vinyl ester resins, unsaturated polyester resins, phenolic resins, melamine resins, furan resins, and bismaleimide resins. These thermosetting resins can be used alone or in combination of two or more.

Examples of the thermoplastic resins include polyamide resins, polyethylene terephthalate resins, polybutylene terephthalate resins, polycarbonate resins, polyurethane resins, polypropylene resins, polyethylene resins, polystyrene resins, acrylic resins, polybutadiene resins, polyisoprene resins, and resins obtained by modifying these resins by copolymerization or the like. Of these, from the viewpoint that the brittleness-improving effect is high, polyamide resins and polyurethane resins are preferable. These thermoplastic resins can be used alone or in combination of two or more. Furthermore, the thermoplastic resins may be added in the form of particles or may be melted and mixed for use. In the case where the thermoplastic resins in the form of particles are used, from the viewpoint of dispersibility into fibers, the particle size is preferably 30 µm or less, and more preferably 5 to 20 µm.

Examples of the polymerization inhibitors include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization inhibitors can be used alone or in combination of two or more.

Examples of the curing accelerators include metal soaps, such as cobalt naphthenate, cobalt octenoate, vanadyl octenoate, copper naphthenate, and barium naphthenate; and metal chelate compounds, such as vanadyl acetyl acetate, cobalt acetyl acetate, and iron acetylacetonate. Examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators can be used alone or in combination of two or more.

As the fillers, inorganic compounds and organic compounds can be used to adjust the physical properties, such as strength, elastic modulus, impact strength, and fatigue durability, of molded articles.

Examples of the inorganic compounds include calcium carbonate, magnesium carbonate, barium sulfate, mica, talc, kaolin, clay, Celite, asbestos, barite, baryta, silica, silica sand, dolomite limestone, gypsum, fine aluminum powder, hollow balloons, alumina, glass powder, aluminum hydroxide, white limestone, zirconium oxide, antimony trioxide, titanium oxide, molybdenum dioxide, and iron powder.

Examples of the organic compounds include powders of natural polysaccharides, such as cellulose and chitin; and powders of synthetic resins. As the powders of synthetic resins, powders of organic materials, such as hard resins, soft rubber, elastomers, or polymers (copolymers), and particles having a multilayer structure, such as a core-shell structure, can be used. Specific examples include acrylic particles, polyamide particles, particles of butadiene rubber and/or acrylic rugger, urethane rubber, silicon rubber, and the like, polyimide resin powder, fluororesin powder, and phenolic resin powder. These fillers can be used alone or in combination of two or more.

Examples of the mold release agents include zinc stearate, calcium stearate, paraffin wax, polyethylene wax, and carnauba wax. Preferred examples include paraffin wax, polyethylene wax, and carnauba wax. These mold release agents can be used alone or in combination of two or more.

Examples of the thickeners include metal oxides and metal hydroxides, such as magnesium oxide, magnesium hydroxide, calcium oxide, and calcium hydroxide; and acrylic resin-based fine particles. These can be appropriately selected depending on the handleability of the prepreg of the present invention. These thickeners can be used alone or in combination of two or more.

The prepreg of the present invention is produced by step 1 in which the reinforcement fibers (D) are impregnated with a resin solution prepared by mixing the polyisocyanate (a1), the polyol (a2), and/or (a3), the hydroxyalkyl (meth)acrylate (a4), the ethylenically unsaturated monomer (B), and the polymerization initiator (C), for example, by using a known mixer, such as a planetary mixer or a kneader, then a release PET film is arranged on an upper surface thereof, and rolling is performed with a rolling mill to obtain a sheet; and by step 2 in which the sheet is left to stand at normal temperature to 50°C to allow the isocyanate groups of the polyisocyanate (a1) to react with the hydroxyl groups of the polyol (a2) and/or (a3) and (a4). Furthermore, in step 1, within the range not impairing the impregnation property into the fibers, it may be possible to use a resin solution in which the polyisocyanate (a1), the polyol (a2), and/or (a3) and (a4) are allowed to partially react in advance.

The thickness of the prepreg of the present invention is preferably 0.02 to 1.0 mm. When the thickness is 0.02 mm or more, handling for stacking is facilitated, which is preferable. When the thickness is 1 mm or less, good impregnation with the resin is achieved, which is preferable. The thickness is more preferably 0.05 to 0.5 mm.

As a method for obtaining a molded article from the resulting prepreg described above, for example, the following method is used: The release PET film is separated from the prepreg. After 8 to 30 sheets of the prepreg are stacked, the stacked sheets are charged into a mold which is preheated to 110°C to 160°C, and clamping is performed with a compression molding machine to shape the prepreg. A molding pressure of 0.1 to 10 MPa is maintained to cure the prepreg. Then, a molded article is removed. In this case, preferred is a production method in which the stack is subjected to compression molding under heating in a mold having a shear edge at a mold temperature of 130°C to 160°C for a specified time of 1 to 3 minutes per millimeter of the thickness of the molded article, while maintaining a molding pressure of 1 to 8 MPa. In the prepreg of the present invention, even if it takes one minute or more until shaping begins because of the charging operation, white smoke is not generated.

Molded articles obtained from the prepreg of the present invention are excellent in terms of flexural strength, interlaminar shear strength, and the like, and therefore can be suitably used, for example, in automobile components, railway vehicle components, aerospace craft components, ship components, housing equipment components, sporting components, light vehicle components, building and civil engineering components, and casings of OA equipment and the like.

### EXAMPLES

The present invention will be described in more detail below by specific examples.

### (Synthesis Example 1: Synthesis of polyol (a2-1) having ethylenically unsaturated group and aromatic skeleton)

Into a 1-L flask equipped with a thermometer, a nitrogen and air introduction tube, and a stirrer, 340 g of an epoxy resin ("EPICLON 850-CRP" manufactured by DIC Corporation, bisphenol A-type epoxy resin, epoxy equivalent: 170), 170 g of methacrylic acid, and 0.16 g of t-butylhydroquinone were fed. Under a flow of a gas in which nitrogen and air were mixed at 1:1, the temperature was raised to 90°C. Then, 1.1 g of tris(dimethylamino)phenol was added thereto. The temperature was raised to 110°C and reaction was allowed to take place for 12 hours. At this time, since the acid value reached 1 or less, the reaction was terminated. After cooling to about 60°C, the reaction product was taken out from the reaction vessel to obtain epoxy methacrylate as a polyol (a2-1) having an ethylenically unsaturated group and an aromatic skeleton. The resin had a hydroxyl value of 219 mg KOH/g, and the number of functional groups in the resin was 2.

### (Example 1: Production and evaluation of prepreg (1))

100 Parts by mass of the epoxy methacrylate (a2-1) obtained in Synthesis Example 1, 75 parts by mass of an ethylenically unsaturated monomer (B-1) ("NK Ester BPE-100" manufactured by Shin-Nakamura Chemical Co., Ltd., dimethacrylate of an ethylene oxide adduct of bisphenol A, molecular weight: 478, methacryl equivalent: 239, and weight reduction rate when heated under atmospheric pressure at 150°C for 3 minutes: 0.7%), 0.021 parts by mass of parabenzoquinone, and 2.1 parts by mass of a polymerization initiator (C-1) ("Trigonox 122-C80" manufactured by Kayaku Akzo Corporation, organic peroxide) were mixed together, and then, 39 parts by mass of a polyisocyanate (a1-1) ("Millionate MT" 4,4'-MDI manufactured by Tosoh Corporation) was mixed thereto to obtain a resin composition (X-1). In the resin composition (X-1), the content (B) was 35.0% by mass, and the molar ratio (NCO/OH) was 0.80.

The resin composition (X-1) obtained as described above was applied to one surface of a release PET film. Then, carbon fibers (D-1) ("TRK979PQRW" manufactured by Mitsubishi Rayon Co., Ltd.) were placed thereon and were impregnated such that the carbon fiber content was 55% by mass. The same release PET film was placed thereon. The resulting material was heated at 45°C for 24 hours, then left to stand at room temperature for 3 days, and stored to obtain a prepreg (1). The prepreg (1) had a thickness of 0.25 mm.

### [Confirmation of presence or absence of generation of white smoke in prepreg]

The prepreg (1) obtained as described above was cut into 100 mm square and separated from the film. After 8 sheets of the prepreg were stacked, the stacked sheets were charged into the center of a flat-plate mold with a surface temperature of 150°C and left to stand for one minute, during which time the presence or absence of white smoke was confirmed by visual observation and evaluated according to the following criteria:
O: White smoke is not observed.
Δ: White smoke is observed only slightly.
x: A large volume of white smoke is observed.

### [Production of molded article]

The prepreg (1) obtained as described above was cut into 299 mm wide × 219 mm and separated from the film. After 8 sheets of the prepreg were stacked such that the fibers were arranged in the same direction, the stacked sheets were charged into the center of a flat-plate mold to which a mold release agent had been applied once. Compression molding was performed with a compression molding machine under the conditions of a pressure of 4 MPa, an upper mold temperature of 145°C, a lower mold temperature of 143°C, and a molding time of 2 minutes. After the mold was opened, mold releasing and cleaning were performed by using a rubber suction cup with a diameter of 100 mm and air blowing to the mold. The resulting molded article was sandwiched between stainless steel plates with a weight of 5 kg and cooled. In such a manner, a flat-plate molded article (1) of 300 mm wide × 220 mm × 2 mm was obtained. As the mold release agent, a material obtained by diluting DAIFREE GW-251 (manufactured by DAIKIN) 10 times with distilled water was used.

### [Evaluation of moldability]

The moldability at the time of obtaining the molded article (1) described above was evaluated, based on the surface state of the mold after the molded article was released and mold cleaning by air blow was performed, according to the following criteria:
O: No resin adheres to mold, and molding can be started immediately.
Δ: Resin burrs adhere to shear edge of mold.
x: Resin adheres to product surface and shear edge of mold.

### [Evaluation of flexural strength]

A specimen of 15 mm wide and 100 mm long was cut out from the molded article (1) obtained as described above, and flexural strength was measured in accordance with JIS K7074 and evaluated according to the following criteria:
O: 1,000 MPa or more
Δ: 900 MPa or more and less than 1,000 MPa
x: less than 900 MPa

### [Evaluation of interlaminar shear strength]

A specimen of 10 mm wide and 22 mm long was cut out from the molded article (1) obtained as described above. The interlaminar shear strength of the specimen was measured in accordance with JIS K7078 and evaluated according to the following criteria:
O: 70 MPa or more
Δ: 60 MPa or more and less than 70 MPa
x: less than 60 MPa

### (Example 2: Production and evaluation of resin composition for prepreg (2))

A resin solution was prepared in advance by mixing 16.5 parts by mass of a polyol (a3-1) not having an ethylenically unsaturated group but having an aromatic skeleton only ("NEWPOL BPE-20T" by Sanyo Chemical Industries, Ltd., bisphenol A-ethylene oxide adduct, hydroxyl equivalent: 161), 20.8 parts by mass of a polyol (a3-2) not having an ethylenically unsaturated group but having an aromatic skeleton only ("NEWPOL BPE-40" by Sanyo Chemical Industries, Ltd., bisphenol A-ethylene oxide adduct, hydroxyl equivalent: 203), and 62.7 parts by mass of 2-hydroxyethyl (meth)acrylate (a4-1) at 100°C and cooled to normal temperature. To 100 parts by mass of the resin solution, 55 parts by mass of an ethylenically unsaturated monomer (B-1), 0.025 parts by mass of parabenzoquinone, and 2.5 parts by mass of a polymerization initiator (C-1) were mixed, and then, 26.6 parts by mass of polyisocyanate 1 (a1-1), and 64.2 parts by mass of polyisocyanate (a1-2) ("Millionate MR-200" mixture of polymethylene polyphenyl polyisocyanate and diphenylmethane diisocyanate, manufactured by Tosoh Corporation) were mixed thereto to obtain a resin composition (X-2).

In the resin composition (X-2), the content (B) was 22.4% by mass, the molar ratio (a3/a4) was 30/70, and the molar ratio (NCO/OH) was 1.0.

A prepreg (2) and a molded article (2) were produced by the same procedure as in Example 1 except that the resin composition (X-1) used in Example 1 was changed to the resin composition (X-2), and the evaluations were made.

### (Example 3: Production and evaluation of prepreg (3))

A resin composition (X-3), a prepreg (3), and a molded article (3) were produced by the same procedure as in Example 2 except that the ethylenically unsaturated monomer (B-1) used in Example 2 was changed to an ethylenically unsaturated monomer (B-2) ("NK Ester DCP" manufactured by Shin-Nakamura Chemical Co., Ltd. (tricyclodecanedimethanol dimethacrylate, molecular weight: 332, methacryl equivalent: 166, and weight reduction rate when heated under atmospheric pressure at 150°C for 3 minutes: 1.1%), and the evaluations were made.

In the resin composition (X-3), the content (B) was 22.4% by mass, the molar ratio (a3/a4) was 30/70, and the molar ratio (NCO/OH) was 1.0.

### (Example 4: Production and evaluation of prepreg (4))

A resin composition (X-4), a prepreg (4), and a molded article (4) were produced by the same procedure as in Example 2 except that 55 parts by mass of the ethylenically unsaturated monomer (B-1) used in Example 2 was changed to 22 parts by mass, and 2.5 parts by mass of the polymerization initiator (C-1) was changed to 2.1 parts by mass, and the evaluations were made.

In the resin composition (X-4), the content (B) was 10.3% by mass, the molar ratio (a3/a4) was 30/70, and the molar ratio (NCO/OH) was 1.0.

### (Example 5: Production and evaluation of prepreg (5))

A resin composition (X-5), a prepreg (5), and a molded article (5) were produced by the same procedure as in Example 2 except that 55 parts by mass of the ethylenically unsaturated monomer (B-1) used in Example 2 was changed to 22 parts by mass of an ethylenically unsaturated monomer (B-3)("NK Ester BPE-500" manufactured by Shin-Nakamura Chemical Co., Ltd. (dimethacrylate of bisphenol A-ethylene oxide adduct, molecular weight: 804, methacryl equivalent: 402, and weight reduction rate when heated under atmospheric pressure at 150°C for 3 minutes: 0.7%), and 2.5 parts by mass of the polymerization initiator (C-1) was changed to 2.1 parts by mass, and the evaluations were made.

In the resin composition (X-5), the content (B) was 10.3% by mass, the molar ratio (a3/a4) was 30/70, and the molar ratio (NCO/OH) was 1.0.

### (Comparative Example 1: Production and evaluation of prepreg (R1))

A resin composition (RX-1), a prepreg (R1), and a molded article (R1) were produced by the same procedure as in Example 2 except that the unsaturated monomer (B-1) used in Example 2 was changed to phenoxyethyl methacrylate (molecular weight: 206, methacryl equivalent: 206, and weight reduction rate when heated under atmospheric pressure at 150°C for 3 minutes: 13.6%), and the evaluations were made.

The content of the ethylenically unsaturated monomer for comparative use in the total amount of the urethane (meth)acrylate (A) and the ethylenically unsaturated monomer for comparative use was 22.4% by mass, the molar ratio (a3/a4) was 30/70, and the molar ratio (NCO/OH) was 1.0.

### (Comparative Example 2: Production and evaluation of prepreg (R2))

A resin composition (RX-2), a prepreg (R2), and a molded article (R2) were produced by the same procedure as in Example 2 except that the unsaturated monomer (B-1) used in Example 2 was changed to trimethylolpropane trimethacrylate (molecular weight: 338, methacryl equivalent: 113, and weight reduction rate when heated under atmospheric pressure at 150°C for 3 minutes: 3.6%), and the evaluations were made.

The content of the ethylenically unsaturated monomer for comparative use in the total amount of the urethane (meth)acrylate (A) and the ethylenically unsaturated monomer for comparative use was 22.4% by mass, the molar ratio (a3/a4) was 30/70, and the molar ratio (NCO/OH) was 1.0.

### (Comparative Example 3: Production and evaluation of prepreg (R3))

A resin composition (RX-3), a prepreg (R3), and a molded article (R3) were produced by the same procedure as in Example 2 except that the unsaturated monomer (B-1) used in Example 2 was changed to 1,6-hexanediol dimethacrylate (molecular weight: 254, methacryl equivalent: 127, and weight reduction rate when heated under atmospheric pressure at 150°C for 3 minutes: 8.5%), and the evaluations were made.

The content of the ethylenically unsaturated monomer for comparative use in the total amount of the urethane (meth)acrylate (A) and the ethylenically unsaturated monomer for comparative use was 22.4% by mass, the molar ratio (a3/a4) was 30/70, and the molar ratio (NCO/OH) was 1.0.

The evaluation results of the resin compositions for prepregs (1) to (5) and (R1) to (R3) obtained as described above are shown in Tables 1 and 2.

**[Table 1]**

| Table 1 | Example 1 | Example 2 | Example 3 | Example 4 | Example 5 |
|---|---|---|---|---|---|
| Prepreg | (1) | (2) | (3) | (4) | (5) |
| Resin composition | X-1 | X-2 | X-3 | X-4 | X-5 |
| Ethylenically unsaturated monomer (B) (molecular weight/weight reduction rate (%)) | B-1 (478/0.7) | B-1 (478/0.7) | B-2 (332/1.1) | B-1 (478/0.7) | B-3 (804/0.7) |
| Mass% of ethylenically unsaturated monomer (B) | 35.0 | 22.4 | 22.4 | 10.3 | 10.3 |
| Generation of white smoke (150°C) | ○ | ○ | ○ | ○ | ○ |
| Moldability | ○ | ○ | ○ | ○ | ○ |
| Flexural strength (MPa) | ○ | ○ | ○ | ○ | ○ |
| | 1055 | 1120 | 1088 | 1188 | 1032 |
| Interlaminar shear strength (MPa) | ○ | ○ | ○ | ○ | ○ |
| | 75 | 78 | 72 | 81 | 73 |

**[Table 2]**

| Table 2 | Comparative Example 1 | Comparative Example 2 | Comparative Example 3 |
|---|---|---|---|
| Prepreg | (R1) | (R2) | (R3) |
| Resin composition | RX-1 | RX-2 | RX-3 |
| Ethylenically unsaturated monomer (molecular weight/weight reduction rate (%)) | Phenoxyethyl methacrylate (206/13.6) | Trimethylolpropane trimethacrylate (338/3.6) | 1,6-Hexanediol dimethacrylate (254/8.5) |
| Content of ethylenically unsaturated monomer (mass%) | 22.4 | 22.4 | 22.4 |
| Generation of white smoke (150°C) | x | Δ | x |
| Moldability | x | O | Δ |
| Flexural strength (MPa) | O | x | Δ |
| | 1036 | 735 | 922 |
| Interlaminar shear strength (MPa) | O | x | Δ |
| | 74 | 51 | 63 |

In Table 2, the "content of ethylenically unsaturated monomer (mass%)" corresponds to the content of the ethylenically unsaturated monomer (mass%) in the total amount of the urethane (meth)acrylate (A) and the ethylenically unsaturated monomer.

It is confirmed that the prepregs of the present invention of Examples 1 to 5 have excellent moldability and enable to produce a molded article having excellent flexural strength and interlaminar shear strength, and that white smoke is not generated even when left to stand on a mold at 150°C.

On the other hand, in Comparative Examples 1 and 3, in which the molecular weight of the ethylenically unsaturated monomer is less than 320 (the lower limit of the present invention), and the ethylenically unsaturated monomer has a weight reduction rate (%) of 2 or more when heated under atmospheric pressure at 150°C for 3 minutes, it is confirmed that a large volume of white smoke is generated when left to stand on a mold at 150°C, and moldability is poor.

In Comparative Example 2, in which the ethylenically unsaturated monomer has a weight reduction rate (%) of 2 or more when heated under atmospheric pressure at 150°C for 3 minutes, it is confirmed that white smoke is generated, and the molded article has large warpage, exhibiting poor strength properties.

## Claims

1. A prepreg comprising a urethane (meth)acrylate (A), an ethylenically unsaturated monomer (B), a polymerization initiator (C), and reinforcement fibers (D), **characterized in that** the urethane (meth)acrylate (A) is a reaction product of a polyisocyanate (a1) and a polyol (a2) having an ethylenically unsaturated group and an aromatic skeleton, and/or a reaction product of a polyisocyanate (a1), a polyol (a3) not having an ethylenically unsaturated group but having an aromatic skeleton, and a hydroxyalkyl (meth)acrylate (a4), and that the ethylenically unsaturated monomer (B) has a molecular weight of 320 or more and a weight reduction rate (%) of less than 2 when heated under atmospheric pressure at 150°C for 3 minutes.

2. The prepreg according to Claim 1, wherein the ethylenically unsaturated monomer (B) is a bifunctional (meth)acrylate.

3. The prepreg according to Claim 1 or 2, wherein the ethylenically unsaturated monomer (B) is a (meth)acrylate having a (meth)acrylic equivalent of 150 or more.

4. The prepreg according to any one of Claims 1 to 3,
wherein the ethylenically unsaturated monomer (B) has a bisphenol skeleton and/or an alicyclic skeleton.

5. The prepreg according to any one of Claims 1 to 4,
wherein a content of the ethylenically unsaturated monomer (B) in the total amount of the urethane (meth)acrylate (A) and the ethylenically unsaturated monomer (B) is 5 to 50% by mass.

6. The prepreg according to any one of Claims 1 to 5,
wherein a content of an ethylenically unsaturated monomer having a weight reduction rate (%) of 2 or more when heated under atmospheric pressure at 150°C for 3 minutes in the prepreg is 1% by mass or less.

7. The prepreg according to any one of Claims 1 to 6,
wherein the polyol (a2) is a multifunctional epoxy (meth)acrylate.

8. The prepreg according to any one of Claims 1 to 7,
wherein the polyol (a3) is an oxyalkylene adduct of a bisphenol.

9. A molded article **characterized by** comprising a cured product of the prepreg according to any one of Claims 1 to 8.
